# EUROPEAN PATENT APPLICATION

(11) **EP 1 209 855 A2**
(43) Date of publication of application: **29.05.2002**
(21) Application number: 01307071.9
(22) Date of filing: 20.08.2001
(51) Int. Cl.: H04L 12/28

(54) **Remote internet control of instruments**

(30) Priority: 27.11.2000 US 252899 P
(71) Applicant: Newport Electronics Inc., Santa Ana, California 92704-4426 (US)
(72) Inventor: Leontiev, Daniel, California 90703 (US); Hollander, Steven, Los Angeles, California 90049 (US); Nastase, Stefan Serban, California 90049 (US)
(74) Representative: Warren, Anthony Robert

(57) **Abstract**

The invention relates to the control and supervision of instruments and apparatus, such as controllers, panel meters, transmitters, signal conditioners and the like, for use in the operation, supervision and control of, for example industrial machinery plant and processes. The invention provides an apparatus and method whereby information derived from instrumentation (1) which monitors, and, if need be, controls, for example, industrial machinery plant or processes, is passed via the Internet/Ethernet (4) to a supervisor or a supervising instrumentation (2). Conversely, instructions for modifying the operation of said instruments and apparatus may be passed from the supervisor or supervising instrumentation (2) via the Internet/Ethernet (4) to the instrumentation (1) which monitors and controls the plant or process. Preferably provision is made for each item of monitoring and control instrumentation to be provided with a different Internet/Ethernet address.

## Description

### FIELD OF THE INVENTION

This invention relates to the control and supervision of instruments and apparatus such as controllers, panel meters, transmitters, signal conditioners and the like for use in the operation, supervision and control of, for example, industrial, plant, machinery and processes.

For some years it has been possible to connect microprocessor based instruments used, for example, for test and measurement, monitoring and controlling industrial machinery, plant and processes control and automation, to a single computer by serial communications such as RS232 or RS485. In this configuration, the computer is the "master" to the instrument "slaves". If the computer is running the appropriate software and is equipped with the hardware components and software necessary for networking, the instruments could be visible/accessible over a network, such as a Local Area Ethernet Network, a Wide Area Network, or the Internet. The term "accessible" here means that data can be viewed, and settings changed, e.g. changing set points or alarm points as needed, so that an operator does not have to be physically in front of the instrument or controller, but is able to operate it from a remote computer terminal, either fixed or hand-held. The computer which serves as the master to one or multiple instrument slaves could be a "node" on a local area network or "LAN" for which "Ethernet" is the most common standard. The LAN can be separated from the Internet by a so-called "Firewall", which provides security protection from the outside World.

Simplistically speaking, the LAN is similar to a telephone system where a facility may have an internal telephone system or PBX which is connected to the outside World, but calls between individual extensions and the outside world are controlled by a switch. Basically the Ethernet/Internet devices or computers are characterized by an IP (Internet Protocol) number or name, as well as a MAC (Media Access Control) address. An analogy is that automobiles have a VIN (vehicle identification number) assigned by a manufacturer, as well as a License number which can be changed from owner to owner.

In the industry such a network is known and addresses the issue of accessibility using a common language/protocol for a wide variety of devices, such as monitors, controllers, and valves. Later an open system has been used, allowing an operator, supervisor or an administrator to access the same information, for possibly totally different reasons, each without disturbing the others. With the expansion of the use of personal computers, and particularly of the internet, a new and more promising horizon has materialized. However, the difficulty has been that it was necessary to connect the device to a computer that was connected to the network and running software appropriate for the particular application. The computer functions as a "bridge" between the network and the device with which it communicates through a serial port. The computer is also a "server" for other computers on the network, collecting data from the device and translating commands. The computer could be in various form factors such as a desktop pc, notebook pc, or an extremely compact industrial package that could be housed within a machine or an industrial cabinet. However, in every case this can entail a complicated and expensive proposition that would not be practical or cost-effective for certain applications.

### OBJECTS OF THE INVENTION

An object of the invention is to provide a system, for use in the operation, supervision and/or control of apparatus such as industrial processing equipment, or processes, which enables a link to be provided, between the equipment and a remote site, such as a control board or supervisor's office, by linkage incorporating Internet communication.

Another object of the invention is to provide such a system which enables a remote supervisor or operator to receive information from apparatus, such as industrial processing apparatus, and to send instructions to such apparatus, using Internet linkage, (even by hand-held devices).

Yet another object of the invention is to provide controlling and/or supervising instruments (even hand-held or wireless), say for industrial apparatus or processes, which themselves incorporate Net and Webserver means, such that use of intermediary computer apparatus and web-server apparatus is unnecessary.

A still further object of the invention is to provide controlling and/or supervising instrumentation which is adapted to transmit E-mail information to a recipient, for example, an alarm system or a supervisor in charge of a process such as an industrial process, or an investigation such as a temperature measurement or a measurement of a factor in a process. Such instrumentation may be (a) hand-held and/or (b) wireless.

### SUMMARY OF THE INVENTION

In accordance with the invention, instrumentation for monitoring, controlling and/or supervising an operation, such as an industrial operation, incorporates apparatus which when placed on-line provides direct Internet connection with means for supervision and control, enabling the operation to be overseen, and if necessary varied, from a remote location.

The instrumentation includes web server equipment enabling it to be directly connected to the Internet and, for example, to transmit data and receive instructions in standard TCP/IP protocol. By way of example, a supervisor (or a controlling instrumentation replacing a human supervisor) can monitor and control a process through a web browser, such as Microsoft Internet Explorer, from anywhere on the Internet.

According to a further feature of the invention, the instrumentation monitoring a process, for example, is provided with means for preparing and transmitting information by E-mail for reception on a web-enabled pager or cellphone.

The instrumentation may be, for example, controllers for processes, panel meters, transmitters of processing information, signal conditioners, and instruments for measuring and/or monitoring factors such as DC or AC voltages/currents, power, temperature, strain, weight, pressure, torque, vibration, frequency, rate, speed, pulse counting, timing, pH, ORP, conductivity, and contact openings or closures signaling activities and alarms.

Further in accordance with the invention there are provided receptor instruments adapted to receive reported process factors from process controlling apparatus, and to show information, at the supervision site, on programmable color displays, which in a further embodiment, are programmed to change color at any desired set point or alarm point.

In a preferred embodiment the improved monitoring apparatus incorporating the invention is provided, for convenience, with an industry standard RJ-45 connector and is enabled to send and receive data in standard TCP/IP packages.

By way of example, using a 1/16DIN temperature controller to control a heater, an engineer can monitor the temperature, change set points and alarm points, turn the heater "on" and "off" and make other modifications from anywhere on both a local network and via the Internet to any desired location. Web pages can readily be customized, and secure password-protected access to the remote controlling devices can be incorporated.

The apparatus of the present invention can be assigned an IP address on the network, and assigned if desired an easily remembered name, such as "Heater 1".

In accordance with a further feature, the improved apparatus may be assigned an authorized Internet IP address, from an Internet Service Provider, and may function as a World-wide Web Server delivering any specific information required.

In accordance with a further feature of the invention, the same Internet connection capability is incorporated in a discrete DIN rail mounted device, which may have a hub for connecting to a plurality of instruments which then have serial communications capability to the Ethernet and the Internet.

The server may be both a Web Server and an Ethernet-Serial Bridge compatible with RS-232, RS-422 and RS-485.

Further, the present invention provides an embedded web-server, and memory to store specific Web pages, replacing the computer.

This can in practice be provided by embedding the essential software or firmware for communicating over a network in TCP/IP and serving Web pages in the memory of the instrument's microprocessor. Alternatively, instead of putting all the instrument's functions in one microprocessor, a second small microprocessor to handle communications can work in tandem with the microprocessor managing other functions. With an Ethernet driver in the circuit, the instrument can now connect directly to an Ethernet LAN, WAN, or the Internet. Further, if an optional RS-485 driver is installed, the instrument can become a hub for up to, say, 31 devices, allowing a user to access up to, say, 32 particular devices through one network connection and one IP address, and without the need of any other software. Once on an Ethernet network, the web pages can be accessed from any personal computer which has a standard web browser, by simply entering an IP number or name assigned to the server. In this way, the use of the Internet is expanded to being an instrumentation circle, offering an open system, without proprietary software, accessible to anyone. Appropriately, it is desirable to incorporate several levels of security protected by password identification.

### BRIEF DESCRIPTION OF THE DRAWINGS

In the drawings:
Figure 1 is a block diagram to show essentials of the invention:
Figure 2 shows link-up arrangements for a temperature controller having Internet-provided operational facility;
Figure 3 is a block diagram to illustrate in descriptive terms some essentials of the manner of construction and operation of a system of remote supervision and control of, for example, an industrial operation;
Figure 4 is a schematic lay-out of a system utilizing a commercially available 1/8 DIN controller as a HUB for up to 32 devices;
Figure 5 is a schematic layout of an alternative configuration which allows direct connection of a panel meter or controller to the Ethernet via a 10Base-T RJ-45 connector.

### DESCRIPTION OF THE PREFERRED EMBODIMENTS

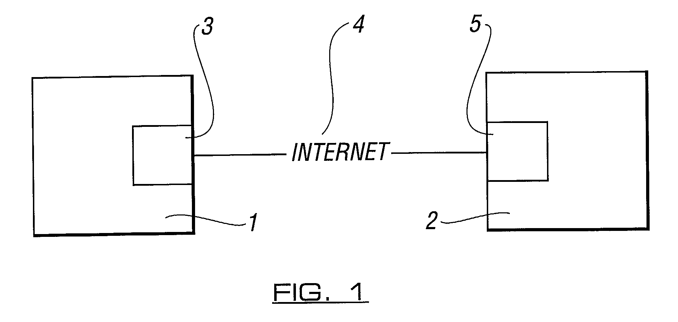

Referring to Figure 1 of the drawings, a device 1 such as a control for an industrial process is operated and/or supervised from a distant location 2, such as an instrument bank or a supervisor's desk. The device 1 has incorporated in it a server 3 which is linked to the Internet 4. The instrument bank or supervisor's desk at location 2 has incorporated in it known customized computer apparatus 5 providing a connection to and from the Internet 4. Accordingly the supervisor may be at a remote location and nevertheless be able both to supervise and to control the industrial process, as the case may be.

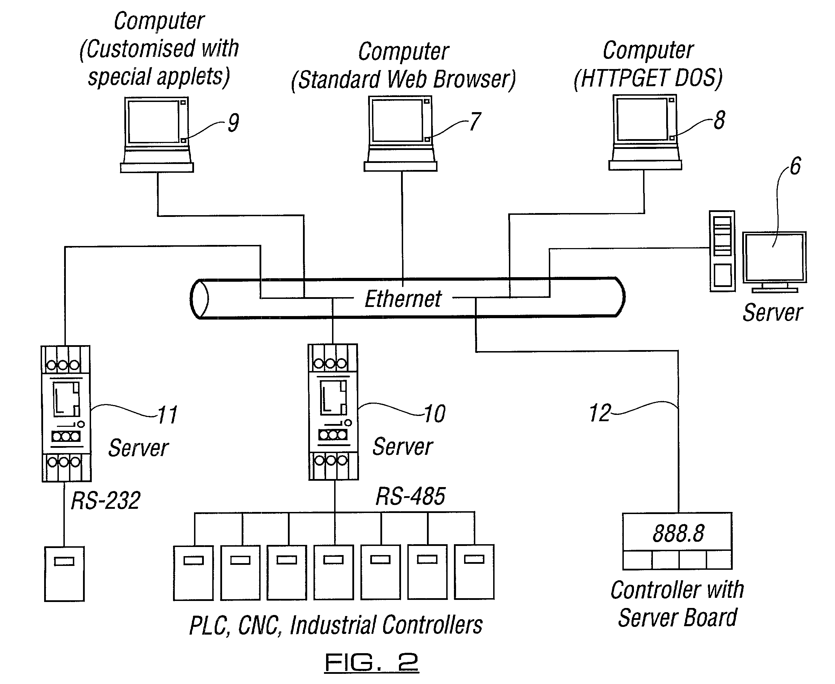

Referring to Figure 2 of the drawings there is shown a link-up arrangement for a temperature controller having Internet-provided operational facility. The controller may be used as a stand-alone DIN Rail mounting unit, or as a portable monitor/controller.

In the arrangement shown in Figure 2, the server 6 is constructed to connect industrial devices with serial interfaces to the Ethernet Network, using TCP/IP protocol. It contains a Web Server and RS-232/485 interfaces.
With this construction it is possible to make up the following arrangements:
(a) Use computer 7 with standard Web Browser (TCP/IP protocol) or a computer 8 with HTTPGET DOS program for network connectivity;
(b) Install via RS-232/485 serial port connection;
(c) Transfer data from RS-232/485 serial interface to TCP/IP using a built-in socket server;
(d) Use a computer 9 with a standard home page or customized web page using special applets, which can be made available on a prepared web site.

Figure 2 of the drawings shows how it is possible to hook up the devices with serial interface on the Net, using apparatus having server means, as seen at 10, 11 and 12.

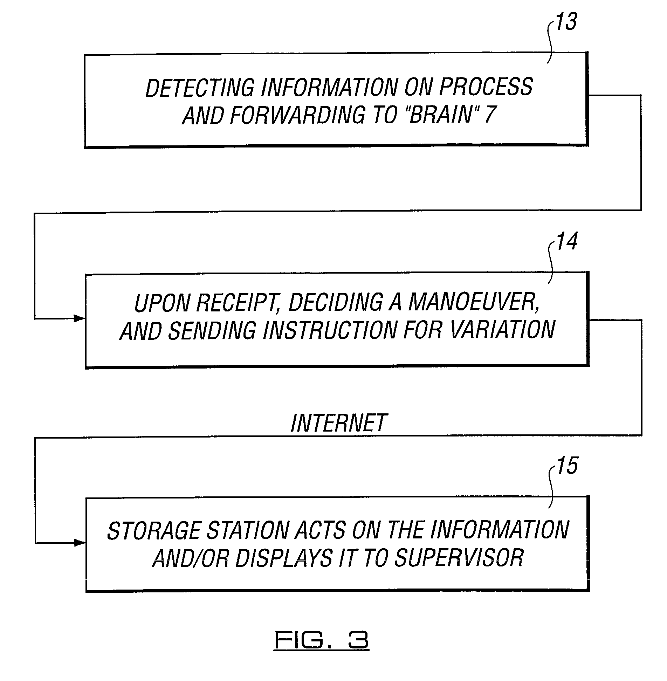

Referring to Figure 3 of the drawings, the block diagram shows monitoring and control equipment 13 which would be installed at the site of the operation, e.g. a manufacturing process, which it is desired to monitor and control from a remote location. The monitoring and control equipment 13 is connected to a "brain" apparatus 14 likewise situated at the operation site and which, upon receipt of information from the monitoring and control equipment 13, decides upon a desired or essential change of operating conditions, e.g. to increase or decrease a factor of the manufacturing process. Information is then passed, via the Internet, to a storage station 15 which retrieves the information and either acts upon it, or displays it to a supervisor, as the case may be. If change of operating conditions is necessary, then revised "instructions" are sent in the reverse direction, again via the Internet, to the detecting and control system 6 which carries out the appropriate changes.

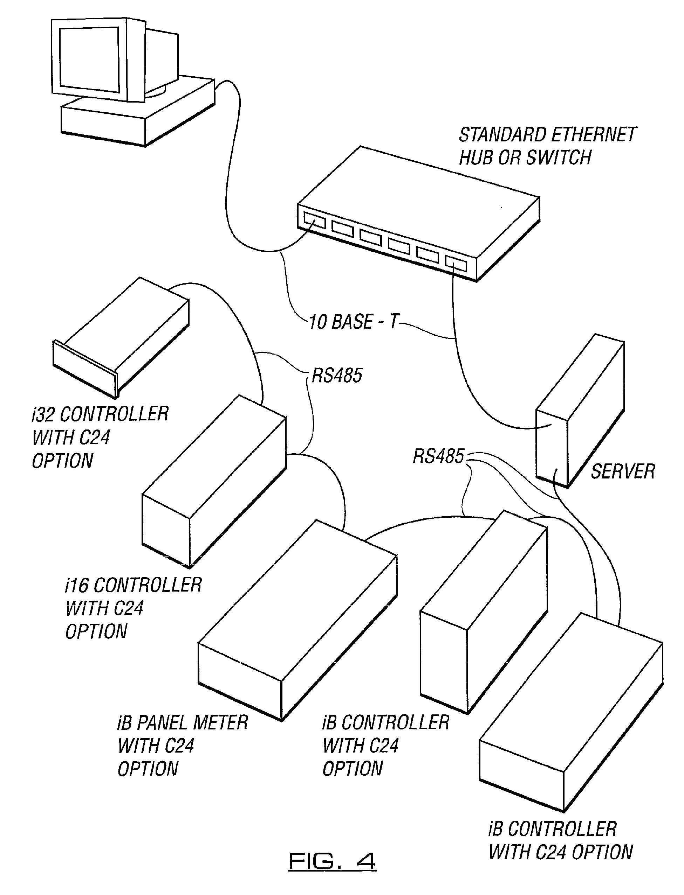

Referring to Figure 4 of the drawings there is shown schematically a layout of a system utilizing a 1/8 DIN controller, manufactured and distributed commercially in the United States, as a HUB for up to 32 devices.

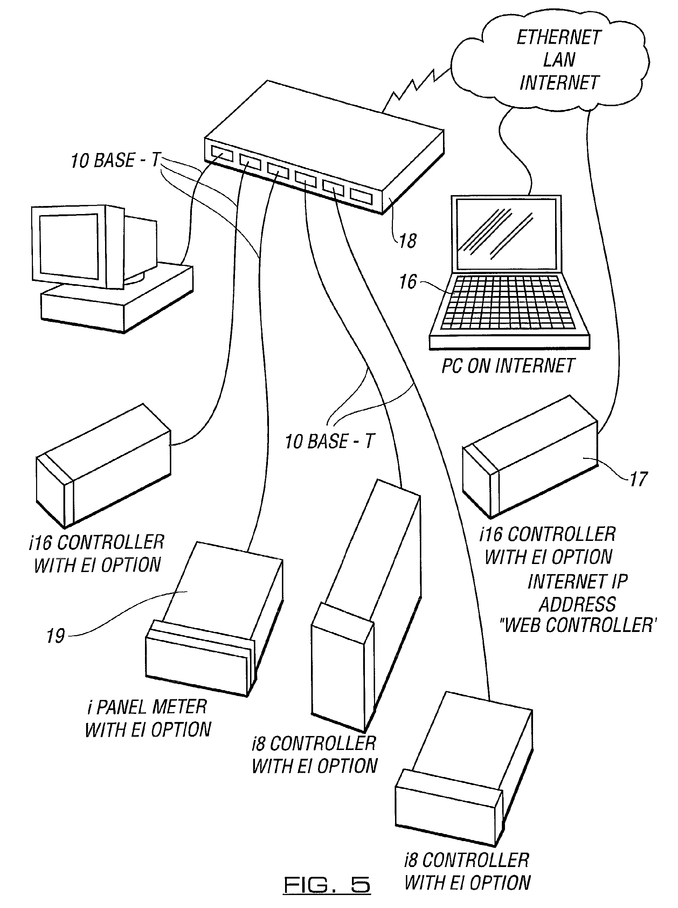

Referring to Figure 5 of the drawings there is shown another configuration which utilizes a lap-top computer 16, or an i-16 controller 17 with EL option, which can be connected, via the Internet, with a standard Ethernet hub or switch 18. This allows the 1/8 DIN and 1/16 DIN instruments to function as stand-alone web servers having unique addresses if preferred.

## Claims

1. Apparatus, for controlling and supervising an operation at a remote location, comprising:
(1) a controlling and supervising means,
(2) web server equipment connected to said controlling and supervising means to enable it to be connected to the Internet/Ethernet;
(3) an Internet/Ethernet hub;
(4) control and supervising devices coupled to said hub.

2. Apparatus, as claimed in claim 1, wherein said control and supervising means are coupled to said hub via means permitting operation of 1/8 DIN and 1/16DIN devices.

3. Apparatus, as claimed in claim 1,further including means for transmitting information from said control and supervising devices in the form of E-mail.

4. The method of operating apparatus for controlling and supervising an operation at a remote location, which comprises steps of:
(1) feeding information from means, for controlling and supervising said operation, to a web server;
(2) transmitting said information via said web server to the Internet/Ethernet;
(3) receiving said information from the Internet/Ethernet,
(4) using said received information to modify said operation.
